(19) **Europäisches Patentamt European Patent Office Office européen des brevets**

(11) **EP 4 726 796 A1**

(12) **EUROPEAN PATENT APPLICATION**

(43) Date of publication:
**15.04.2026 Bulletin 2026/16**

(21) Application number: **25208412.4**

(22) Date of filing: **13.10.2025**

(51) International Patent Classification (IPC):
**H01M 4/04** (2006.01)    **H01M 4/139** (2010.01)
**H01M 4/62** (2006.01)

(52) Cooperative Patent Classification (CPC):
**H01M 4/0404; H01M 4/0435; H01M 4/139;
H01M 4/623**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **14.10.2024 KR 20240139777**

(71) Applicant: **SK On Co., Ltd.**
**Seoul 03161 (KR)**

(72) Inventors:
• **JO, Yoon Ji**
  **34124 Daejeon (KR)**
• **GIL, Na Eun**
  **34124 Daejeon (KR)**
• **KIM, Min Cheol**
  **34124 Daejeon (KR)**
• **KIM, Hyun Ji**
  **34124 Daejeon (KR)**
• **LEE, Jong Hyeok**
  **34124 Daejeon (KR)**
• **HWANG, Chang Mook**
  **34124 Daejeon (KR)**

(74) Representative: **Stolmár & Partner**
**Patentanwälte PartG mbB**
**Blumenstraße 17**
**80331 München (DE)**

(54) **ELECTRODE FOR LITHIUM SECONDARY BATTERY AND MANUFACTURING METHOD THEREOF**

(57)    In a method for manufacturing an electrode for a lithium secondary battery, an electrode mixture is prepared by mixing an electrode active material and a prepolymer binder including a polyvinylidene fluoride (PVDF)-based polymer. The electrode mixture is dry-coated onto an electrode current collector to form a preliminary electrode active material layer. The preliminary electrode active material layer is roll-pressed. An electric field is applied to the preliminary electrode active material layer to form an electrode active material layer. The electrode for a lithium secondary battery exhibits improved elasticity and ionic conductivity, thereby improving the cycle life characteristics and electrical properties of the secondary battery.

[FIG. 1]

EP 4 726 796 A1

# EP 4 726 796 A1

**Description**

[BACKGROUND OF THE INVENTION]

1. Field of the Invention

The embodiments of the present application relate to an electrode for a lithium secondary battery and a manufacturing method thereof. More specifically, the present disclosure relates to an electrode for a lithium secondary battery including a binder and a method for manufacturing the same.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickel-cadmium battery, and a nickel-hydrogen battery. Among these, lithium secondary batteries are actively being researched and developed due to their high operating voltage, high energy density per unit weight, and advantages in charging speed and weight reduction.

Generally, the lithium secondary battery includes a cathode, an anode, a separation membrane and an electrolyte. The cathode includes a cathode mixture including a cathode active material, a conductive material and a binder, and a cathode current collector. The anode includes an anode mixture including an anode active material, a conductive material and a binder, and an anode current collector.

The binder may act as an adhesive in the cathode and the anode, thereby physically stabilizing them. The type of binder varies depending on the properties required for the cathode and the anode. Polyvinylidene fluoride (PVDF) and polytetrafluoroethylene (PTFE) are known as cathode binders, while styrene-butadiene rubber (SBR) and carboxymethyl cellulose (CMC) are known as anode binders.

In the secondary battery, the volume of the cathode or anode active material may expand during charging and discharging or exposure to high temperatures, and the binder may be physically separated from the active material due to the volume expansion. Consequently, the electrical characteristics, such as capacity and resistance, as well as the cycle life characteristics, of the secondary battery may deteriorate.

During the process of drying the solvent used to manufacture the cathode or anode, migration or phase transition of the binder may degrade the electrical properties of the secondary battery. In addition, the process of drying the solvent requires a solvent recovery process and drying equipment, which is costly, energy-intensive, and not environmentally friendly. Therefore, there is a need for a binder capable of maintaining the electrical properties of the secondary battery and a method for manufacturing the same.

[SUMMARY OF THE INVENTION]

An object of the present disclosure is to provide an electrode for a secondary battery having improved stability.

Another object of the present disclosure is to provide a method for manufacturing an electrode for a secondary battery having improved stability.

In a method for manufacturing an electrode for a lithium secondary battery, an electrode mixture is prepared by mixing an electrode active material and a prepolymer binder including a polyvinylidene fluoride (PVDF)-based polymer. The electrode mixture is dry-coated onto an electrode current collector to form a preliminary electrode active material layer. The preliminary electrode active material layer is roll-pressed. An electric field is applied to the preliminary electrode active material layer to form an electrode active material layer.

In some embodiments, the step of roll-pressing may include a first binder deformation that increases an elastic modulus (Young's modulus) of the prepolymer binder or induces a phase transition of the prepolymer binder.

In some embodiments, the prepolymer binder may include a PVDF-based polymer having an elastic modulus of less than 200 GPa.

In some embodiments, the prepolymer binder may include alpha-phase PVDF (a-PVDF).

In some embodiments, the step of applying an electric field to the preliminary electrode active material layer may include a second binder transformation that increases the elastic modulus of at least a portion of the prepolymer binder that has not undergone a first phase transition through the first binder transformation or induces a phase transition.

In some embodiments, the electrode active material layer may include a polymer binder in which the prepolymer binder has undergone a phase transition through the first binder transformation and the second binder transformation, and the polymer binder may have an elastic modulus of 200 GPa to 300 GPa.

In some embodiments, the polymer binder may include beta-phase PVDF ($\beta$-PVDF).

In some embodiments, the electric field may have a magnitude of 0.5 kV/m to 50 kV/m.

In some embodiments, the electrode mixture may be prepared in a non-solvent type.

In some embodiments, the steps of dry coating and roll-pressing may be performed at a temperature of 100 °C or lower.

In some embodiments, the step of applying an electric field may be performed after the step of roll-pressing.

In some embodiments, the step of applying an electric field may be performed simultaneously with the step of roll-pressing.

An electrode for a lithium secondary battery includes: an electrode current collector; and an electrode active material layer formed on the electrode current collector and including an electrode active material and a polyvinylidene fluoride (PVDF)-based polymer binder having an elastic modulus (Young's modulus) of 200 GPa to 300 GPa.

In some embodiments, the PVDF-based polymer binder may include beta-phase ($\beta$) PVDF ($\beta$-PVDF), and may further include alpha-phase ($\alpha$) PVDF (a-PVDF) or gamma-phase ($\gamma$) PVDF ($\gamma$-PVDF).

In some embodiments, the molar fraction of $\beta$-PVDF in the PVDF-based polymer binder may be 50 mol% to 90 mol%.

A lithium secondary battery may include: a cathode; and an anode disposed opposite to the cathode, wherein at least one of the cathode and the anode may include the electrode for a lithium secondary battery according to the above-described embodiments.

The method for manufacturing a lithium secondary battery electrode according to the above-described embodiments may dry-coat an electrode mixture including a prepolymer binder. The dry coating process is environmentally friendly because it does not use organic solvents and therefore does not produce toxic substances. In addition, since no additional equipment or processes are required to remove the solvent, the lithium secondary battery electrode may be manufactured in a cost-effective and energy-efficient manner. Furthermore, dry coating may increase the thickness of the electrode active material while reducing the binder content, thereby improving the energy density of the lithium secondary battery electrode.

In the method for manufacturing a lithium secondary battery electrode according to the above-described embodiments, the preliminary electrode active material layer may be roll-pressed and an electric field may be applied. The roll-pressing and electric field application each induce a phase transition of the prepolymer binder, thereby enhancing the elasticity of the binder. Consequently, the cycle life characteristics and stability of the lithium secondary battery may be improved.

The lithium secondary battery electrode may include a PVDF-based polymer binder having an elastic modulus within a predetermined range. The PVDF-based polymer binder may reduce the expansion rate of the electrode due to its high elasticity. Accordingly, the capacity and resistance characteristics of the lithium secondary battery may be maintained over an extended period of time.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic view illustrating a method for manufacturing an electrode for a lithium secondary battery according to exemplary embodiments;

FIG. 2 is a schematic cross-sectional view illustrating an electrode for a lithium secondary battery according to exemplary embodiments;

FIGS. 3A to 3C are schematic views illustrating phases of a binder included in the electrode for a lithium secondary battery according to exemplary embodiments;

FIGS. 4A to 4C are schematic cross-sectional views illustrating suppression of volume expansion of the binder included in the electrode for a lithium secondary battery according to exemplary embodiments;

FIGS. 5A to 5C are schematic cross-sectional views illustrating volume expansion of the binder included in the electrode for a lithium secondary battery according to comparative examples; and

FIG. 6 is a schematic cross-sectional view illustrating a lithium secondary battery according to exemplary embodiments.

[DETAILED DESCRIPTION OF THE INVENTION]

According to embodiments disclosed in the present application, an electrode mixture may be prepared by mixing an electrode active material with a prepolymer binder including a polyvinylidene fluoride (PVDF)-based polymer. The electrode mixture may be dry-coated to form a preliminary electrode active material layer, the preliminary electrode active material layer may be roll-pressed, and an electric field may be applied to the preliminary electrode active material layer. In addition, a secondary battery including a polymer binder having an elastic modulus (Young's modulus) within a predetermined range is provided.

The exemplary embodiments will now be described in more detail with reference to the accompanying drawings. However, the drawings and embodiments included in the present specification are merely intended to aid in the understanding of the technical concept of the present disclosure. Accordingly, the present disclosure should not be construed as being limited only to the matters described in the drawings and embodiments.

The term "electrode" as used herein may include a cathode and an anode.

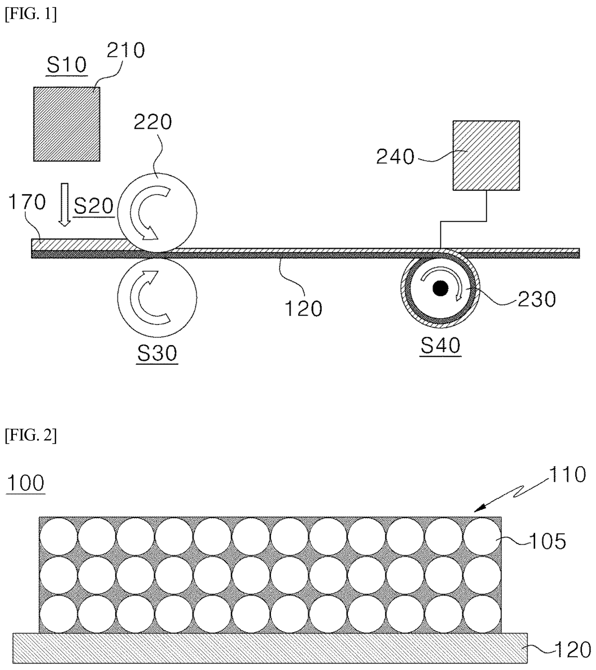

FIG. 1 is a schematic view illustrating a method for manufacturing an electrode for a lithium secondary battery according to exemplary embodiments.

FIG. 2 is a schematic view illustrating an electrode for a lithium secondary battery according to exemplary embodiments. For convenience of description, specific illustrations of the polymer binder and conductive material are omitted in FIG. 2. The structure of the electrode in FIG. 2 is schematically and exemplarily illustrated, and the electrode of the present disclosure is not limited to the shape, structure or arrangement shown in FIG. 2.

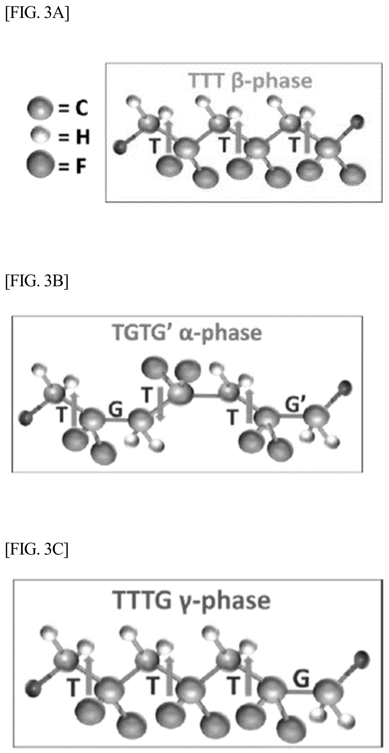

FIGS. 3A to 3C are schematic views illustrating phases of a PVDF-based polymer binder included in the electrode for a lithium secondary battery according to exemplary embodiments. FIG. 3A is a view illustrating a beta ($\beta$) phase of the PVDF-based polymer binder according to exemplary embodiments, FIG. 3B is a view illustrating an alpha ($\alpha$) phase of the PVDF-based polymer binder according to exemplary embodiments, and FIG. 3C is a view illustrating a gamma ($\gamma$) phase of the PVDF-based polymer binder according to exemplary embodiments.

Referring to FIG. 1, an electrode mixture may be prepared by mixing an electrode active material with a prepolymer binder including a polyvinylidene fluoride (PVDF)-based polymer in an electrode mixture mixing unit 210 (e.g., S10). The electrode mixture may be dry-coated onto an electrode current collector 120 to form a preliminary electrode active material layer 170 (e.g., S20). The preliminary electrode active material layer 170 may be roll-pressed by a rolling unit 220 (e.g., S30). An electric signal may be applied to the preliminary electrode active material layer 170 in an electric field application unit 230 using an electric field supplied from an electric field supply unit 240 to form an electrode active material layer (e.g., S40).

Referring to FIG. 2, an electrode 100 for a lithium secondary battery may include the electrode current collector 120, and an electrode active material layer 110 formed on the electrode current collector 120 and including an electrode active material 105. The electrode active material layer 110 may include a polyvinylidene fluoride (PVDF)-based polymer binder (not shown) and a conductive material (not shown) between the electrode active materials 105.

Referring to FIGS. 3A to 3C, the PVDF-based polymer binder may include one or more of an alpha phase ($\alpha$) PVDF ($\alpha$-PVDF), a beta phase ($\beta$) PVDF ($\beta$-PVDF), and a gamma phase ($\gamma$) PVDF ($\gamma$-PVDF).

In FIGS. 3A to 3C, T may be trans (T), indicating a structure in which a fluorine atom bonded to one of two adjacent carbon atoms and a hydrogen atom bonded to the other carbon atom are arranged in opposite directions, and G may be gauche (G), indicating a structure in which a fluorine atom bonded to one carbon atom and a hydrogen atom bonded to the other carbon atom are arranged in the same direction.

As shown in FIG. 3A, the $\beta$-PVDF may include a structure consisting only of trans. As shown in FIG. 3B, the $\alpha$-PVDF may include a structure in which trans and gauche are alternately arranged. As shown in FIG. 3C, the $\gamma$-PVDF may include a structure in which three consecutive trans and one gauche are repeatedly present in the form of a single monomer.

According to exemplary embodiments, an electrode mixture may be prepared by mixing the electrode active material 105 with a prepolymer binder including a PVDF-based polymer.

The electrode active material 105 may include a cathode active material or an anode active material.

The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

For example, the metals may be included as the main active element, and auxiliary elements may be added to the main active element to enhance the chemical stability of the cathode active material or the layered structure/crystal structure. The auxiliary elements may be incorporated into the layered/crystal structure together with the main active element to form bonds, and it should be understood that this case is also included within the chemical structure represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may serve as an auxiliary active element which contributes to the capacity/output activity of the cathode active material together with Co or Mn, such as Al.

As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

According to exemplary embodiments, the electrode mixture may further include a conductive material.

The conductive material may enhance the conductivity and/or the mobility of lithium ions or electrons in the cathode active material layer or the anode active material layer.

For example, the conductive material may include carbon-based conductive materials such as graphite, carbon black, acetylene black, Ketjen black, graphene, carbon nanotubes, vapor-grown carbon fibers (VGCFs), and carbon fibers, and/or metal-based conductive materials, including perovskite materials, such as tin, tin oxide, titanium oxide, $LaSrCoO_3$, and $LaSrMnO_3$.

For example, the conductive material may be included in an amount of 1% by weight ("wt%") to 10 wt% based on the total weight of the electrode mixture. In one embodiment, the conductive material may be included in an amount of 1 wt% to 5 wt% based on the total weight of the electrode mixture.

According to exemplary embodiments, the electrode mixture may further include a thickener. The thickener may include, for example, carboxymethyl cellulose (CMC).

The prepolymer binder may include a polyvinylidene fluoride (PVDF)-based polymer binder.

According to exemplary embodiments, the prepolymer binder may include a PVDF-based polymer binder having an elastic modulus of less than 200 GPa. According to exemplary embodiments, the prepolymer binder may include a PVDF-based polymer binder having an elastic modulus of 100 GPa to 200 GPa, 110 GPa to 190 GPa, or 120 GPa to 180 GPa.

For example, the prepolymer binder may include $\alpha$-PVDF. For example, the prepolymer binder may include 50 mol% or more, 60 mol% or more, or 65 mol% or more of $\alpha$-PVDF based on a molar fraction. In one embodiment, the prepolymer binder may include 70 mol% or more of $\alpha$-PVDF based on a molar fraction.

When the prepolymer binder includes $\alpha$-PVDF, the manufacturing efficiency of the electrode for a lithium secondary battery may be improved.

According to exemplary embodiments, the prepolymer binder may be included in an amount of 0.5 wt% to 15 wt% based on the total weight of the electrode mixture.

As the prepolymer binder is included within the above range, it may be mixed with a non-solvent, which will be described below, and then dry-coated.

The electrode active material and the prepolymer binder including a PVDF-based polymer may be mixed in the electrode mixture mixing unit 210.

For example, the electrode mixture mixing unit 210 may include a mixer, and the electrode active material and the prepolymer binder may be mixed using the mixer. For example, the electrode mixture mixing unit may further include and mix a conductive material and a thickener.

As the mixer, for example, a rotary kiln, a jet mill, an impact mill, a ball mill, a bead mill, a rod mill, a blender, or the like, may be used. For example, the electrode active material and the prepolymer binder may be mixed at a speed of 10 to 1,000 rpm for 5 to 300 minutes.

According to exemplary embodiments, the electrode mixture may be prepared in a non-solvent type.

The non-solvent type may include a form in which the solvent is used in an amount of less than 0.5 wt% based on the total weight of the electrode mixture. Examples of the solvent may include N-methyl-2-pyrrolidone (NMP), dimethylformamide, dimethylacetamide, N,N-dimethylaminopropylamine, ethylene oxide, tetrahydrofuran, water, purified water, deionized water, distilled water, ethanol, isopropanol, methanol, acetone, n-propanol, t-butanol, and the like.

By mixing the electrode mixture in a solvent-free manner, toxic substances are not generated due to the use of organic solvents, enabling the production of an electrode for a lithium secondary battery in an eco-friendly manner. In addition, since a hot air drying or vacuum drying process for solvent removal is not required, the electrode for a lithium secondary battery may be manufactured efficiently in terms of cost and energy consumption.

The electrode mixture obtained after mixing may be dry-coated onto the electrode current collector 120 to form the preliminary electrode active material layer 170.

The electrode current collector 120 may include a cathode current collector or an anode current collector.

According to exemplary embodiments, the cathode current collector may include, for example, stainless steel, nickel, aluminum, titanium, copper, or an alloy thereof. The cathode current collector may also include, for example, aluminum or stainless steel whose surface is treated with carbon, nickel, titanium or silver.

In one embodiment, the cathode current collector may include aluminum or an aluminum alloy.

According to exemplary embodiments, the anode current collector may include, for example, a copper foil, a nickel foil, a stainless steel foil, a titanium foil, a nickel foam, a copper foam, a polymer substrate coated with conductive metal and the like.

The preliminary electrode active material layer 170 may be formed on at least one surface of the electrode current collector 120. In one embodiment, the preliminary electrode active material layer 170 may be formed on both surfaces (the upper and lower surfaces) of the electrode current collector 120.

The dry coating may be performed, for example, by a dry ball milling method, a Maxwell method, an extrusion method, a brush method, or a spray (dry spray deposition) method.

Since the electrode mixture is dry-coated onto the electrode current collector 120, the thickness of the electrode active material layer may be reduced while improving the capacity and energy density of the secondary battery. Furthermore, since dry coating does not require high temperatures, the prepolymer binder may be phase-transitioned to a polymer binder having a predetermined elastic modulus.

According to exemplary embodiments, the dry coating may be performed at a temperature of 100 °C or lower. For example, the dry coating may be performed at a temperature of 90 °C or lower, or from 0 °C to 80 °C.

For example, wet coating using a solvent requires a temperature of 140 °C or higher during the process of drying the solvent. This may result in the phase transition of $\alpha$-PVDF to $\gamma$-PVDF, thereby preventing the production of a polymer binder having a predetermined elastic modulus.

The preliminary electrode active material layer 170 may be roll-pressed in the rolling unit 220.

According to exemplary embodiments, the preliminary electrode active material layer 170 may be roll-pressed in the rolling unit 220 to perform a first binder deformation that increases the elastic modulus (Young's modulus) of the prepolymer binder or induces a phase transition of the prepolymer binder.

For example, the prepolymer binder included in the preliminary electrode active material layer 170 may include $\alpha$-PVDF and may undergo a phase transition to $\beta$-PVDF by roll-pressing.

In exemplary embodiments, the prepolymer binder included in the preliminary electrode active material layer 170 after roll-pressing may have a molar fraction of $\beta$-PVDF of 20 mol% or more, 25 mol% or more, 27 mol% or more, or 30 mol% or more.

For example, the prepolymer binder included in the preliminary electrode active material layer after roll-pressing may have an elastic modulus of 140 GPa or more. Specifically, the elastic modulus of the prepolymer binder included in the preliminary electrode active material layer after roll-pressing may be 140 GPa or more and 240 GPa or less, 145 GPa or more and 235 GPa or less, or 150 GPa or more and 230 GPa or less.

In exemplary embodiments, the roll-pressing may be performed at a temperature of 100 °C or lower, 0 °C to 90 °C or lower, 0 °C to 80 °C, or 0 °C or higher to 70 °C. Within the above range, the molar fraction of $\beta$-PVDF in the polymer binder may be increased. For example, when the roll-pressing is performed at a temperature exceeding 100 °C, the proportion of $\gamma$-PVDF may increase, resulting in a decrease in the elastic modulus of the polymer binder.

An electric field may be applied to the preliminary electrode active material layer 170 in the electric field application unit 230. The rolling unit 220 and the electric field application unit 230 are illustrated separately in FIG. 1 for convenience of description, but the roll-pressing in the rolling unit 220 and the electric field application unit 230 may be performed not only sequentially but also in other orders. For example, the roll-pressing and electric field application may be performed simultaneously, or the roll-pressing may be performed after the application of the electric field.

For example, the preliminary electrode active material layer 170 may rotate in a predetermined direction in the electric field, and an electric field may be applied to the rotating preliminary electrode active material layer 170.

According to exemplary embodiments, the step of applying the electric field may be performed after the step of roll-pressing.

According to exemplary embodiments, the step of applying the electric field may be performed simultaneously with the step of roll-pressing.

According to exemplary embodiments, the step of applying the electric field may induce a phase transition of the prepolymer binder included in the preliminary electrode active material layer 170.

For example, the application of the electric field may increase the elastic modulus of at least a portion of the prepolymer binder that has not undergone a first phase transition through the first binder deformation of the preliminary electrode active material layer, or may induce a second binder deformation that causes a phase transition.

According to exemplary embodiments, the electric field may be applied by supplying a direct current (DC) or alternating current (AC) voltage from the electric field supply unit 240.

According to exemplary embodiments, an electric field having an intensity of 0.5 kV/m to 100 kV/m, 0.5 kV/m to 50 kV/m, or 10 kV/m to 50 kV/m may be applied from the electric field supply unit.

For example, the prepolymer binder included in the preliminary electrode active material layer 170 may include $\alpha$-PVDF and may undergo a phase transition to $\beta$-PVDF under an applied electric field. By applying an electric field within the above range, the ratio of $\beta$-PVDF may be controlled.

According to exemplary embodiments, in order to manufacture a polymer binder within the above elastic modulus range, a plurality of electric field application units 230 may be included to apply an electric field to the preliminary electrode active material layer 170 multiple times. The plurality of electric field application units 230 may receive an electric field from the same electric field supply unit 240, or may each receive an electric field from different electric field supply units.

For example, the roll-pressing may primarily induce a phase transition of the $\alpha$-PVDF in the prepolymer binder to $\beta$-PVDF, and the application of the electric field may secondarily induce a phase transition of the remaining $\alpha$-PVDF in the prepolymer binder, which has not undergone a primary phase transition, to $\beta$-PVDF.

According to exemplary embodiments, the step of applying an electric field to the preliminary electrode active material layer may be performed at a temperature of 100 °C or lower. For example, the application of the electric field may be performed at 80 °C or lower, or from 0 °C to 60 °C.

If the temperature is outside the above range, the molar fraction of $\gamma$-PVDF in the prepolymer binder may increase, thereby consuming energy for the phase transition of $\gamma$-PVDF, and thus the molar fraction of $\beta$-PVDF under the electric field may decrease. The phase may revert from $\beta$-PVDF to $\alpha$-PVDF or $\gamma$-PVDF. Accordingly, the elastic modulus of the polymer binder may decrease, and the ionic conductivity of the electrode may decrease.

After the application of the electric field, an electrode active material layer may be formed. The electrode active material layer may include a polymer binder obtained by transforming the prepolymer binder through the first binder transformation and the second binder transformation.

The polymer binder may include a PVDF-based polymer binder having an elastic modulus (Young's modulus) of 200 GPa to 300 GPa.

According to exemplary embodiments, the elastic modulus of the PVDF-based polymer binder may be 200 GPa to 300 GPa. According to exemplary embodiments, the elastic modulus of the PVDF-based polymer binder may be 210 GPa to 290 GPa, 210 GPa to 285 GPa, 210 GPa to 280 GPa, 215 GPa to 280 GPa, or 218 GPa to 278 GPa.

The elastic modulus may be calculated, for example, according to Equation 1 below:

[Equation 1]

$$E = \sigma / \varepsilon$$

In Equation 1, E denotes the elastic modulus, $\sigma$ denotes the uniaxial force per unit surface area, and $\varepsilon$ denotes the change in length divided by the original length.

By including a PVDF-based polymer binder having an elastic modulus within the above range, electrode expansion may be suppressed, and even if the electrode active material undergoes repeated expansion and contraction, the binder may not be physically separated from the active material.

According to exemplary embodiments, the PVDF-based polymer binder may have a bulk modulus of 8 GPa to 12 GPa. According to exemplary embodiments, the bulk modulus of the PVDF-based polymer binder may be 8 GPa to 11.5 GPa, or 8.2 GPa to 10.8 GPa.

According to exemplary embodiments, the polymer binder may include a PVDF-based polymer binder, and the PVDF-based polymer binder may include $\beta$-PVDF.

According to exemplary embodiments, the PVDF-based polymer binder may further include $\alpha$-PVDF or $\gamma$-PVDF.

The properties of the PVDF-based polymer may vary depending on the amount of each phase included in the polymer binder. For example, when the PVDF-based polymer has a high content of $\beta$-PVDF, the elastic modulus and ionic conductivity may be relatively high.

For example, the molar fraction of $\beta$-PVDF in the PVDF-based polymer binder may be 10 mol% or more.

According to exemplary embodiments, the molar fraction of $\beta$-PVDF in the PVDF-based polymer may be 10 mol% to 80 mol%. According to exemplary embodiments, the molar fraction of $\beta$-PVDF in the PVDF-based polymer may be 20 mol% to 80 mol%, 30 mol% to 80 mol%, 40 mol% to 80 mol%, or 50 mol% to 80 mol%.

The $\beta$-PVDF may be aligned in one direction, thereby maximizing the dipole moment. When the $\beta$-PVDF is included within the above range, the elastic modulus of the PVDF-based polymer binder may be improved and the ionic conductivity of the electrode may be enhanced. In addition, the diffusion of the electrolyte may be improved by the PVDF-based polymer binder present on the surface.

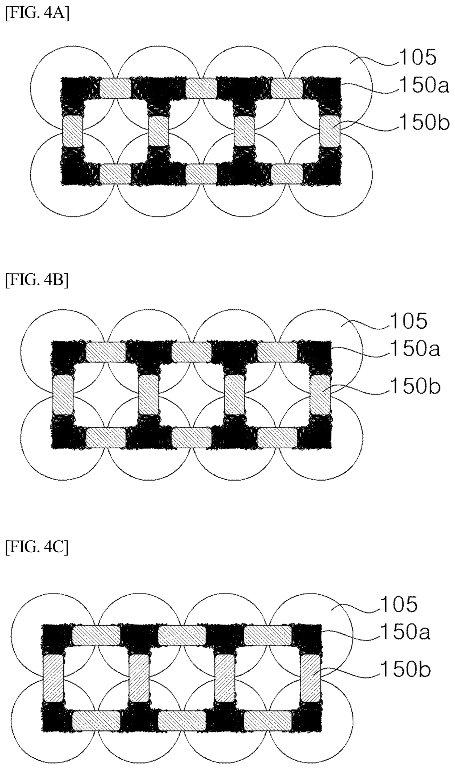

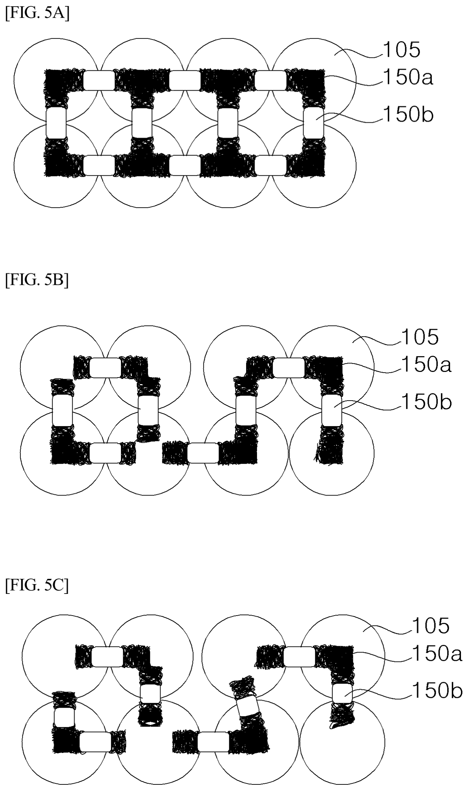

FIGS. 4A to 4C and FIGS. 5A to 5C are schematic views illustrating changes in volume expansion and contraction of electrode active material layers including polymer binders according to exemplary embodiments and comparative examples, respectively.

FIG. 4A is a schematic view illustrating the shape of an electrode active material layer including a polymer binder before volume change according to exemplary embodiments, FIG. 4B is a schematic view illustrating the shape of an electrode active material layer including the polymer binder after volume expansion, and FIG. 4C is a schematic view illustrating the shape of an electrode active material layer including the polymer binder after volume expansion and shrinkage.

FIG. 5A is a schematic view illustrating the shape of an electrode active material layer including a polymer binder before volume change according to the comparative examples, FIG. 5B is a schematic view illustrating the shape of the electrode active material layer including a polymer binder after volume expansion according to the comparative examples, and FIG. 5C is a schematic view illustrating the shape of the electrode active material layer including a polymer binder after volume expansion and contraction according to the comparative examples.

Referring to FIGS. 4A to 4C, the polymer binder may include an amorphous region 150a and a crystalline region 150b. The amorphous region 150a and crystalline region 150b are schematically and exemplarily illustrated, and the polymer binder including the amorphous region and crystalline region of the present disclosure is not limited to the structure or arrangement shown in FIG. 4A to 4C.

As shown in FIGS. 5B and 5C, the volume of the electrode active material 105 may expand during high-temperature exposure or charge/discharge processes of the lithium secondary battery, thereby increasing the crystalline region 150b. When the elastic modulus of the PVDF-based polymer binder falls within the above range, the crystalline region 150b increases, allowing the PVDF-based polymer binder to remain connected. Accordingly, even if the volume of the electrode active material 105 decreases again, the distance between the electrode active materials 105 does not increase, and the arrangement may be maintained. Therefore, the electrical properties of the electrode may be maintained, thereby improving the cycle life characteristics of the lithium secondary battery.

Referring to FIGS. 5A to 5C, for a PVDF-based polymer binder whose elastic modulus does not fall within the above range, the crystalline region 150b may not increase or may increase irregularly, leading to physical separation of the PVDF-based polymer binder. Additionally, if the volume of the electrode active material 105 decreases again after the PVDF-based polymer binder is physically separated, the distance between the electrode active materials 105 increases and their arrangement becomes misaligned, which may reduce the capacity of the electrode and increase the resistance, thereby deteriorating the cycle life characteristics of the lithium secondary battery.

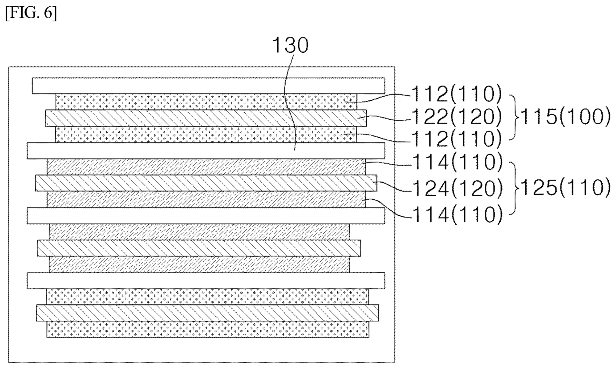

FIG. 6 is a schematic cross-sectional view illustrating a lithium secondary battery according to exemplary embodiments.

Referring to FIG. 6, the lithium secondary battery includes a cathode 115, an anode 125 disposed opposite to the cathode, and at least one of the cathode 115 and the anode 125 may include the above-described electrode for a lithium secondary battery.

A separation membrane 130 may be interposed between the cathode 115 and the anode 125. The separation membrane 130 may prevent an electrical short-circuit between the cathode 115 and the anode 125, and maintain flow of ions.

The separation membrane 130 may include a porous polymer film or a porous non-woven fabric. The porous polymer film may include a polyolefin polymer such as an ethylene polymer, a propylene polymer, an ethylene/butene copolymer, an ethylene/hexene copolymer, or an ethylene/methacrylate copolymer. The porous non-woven fabric may include glass fibers having a high melting point, polyethylene terephthalate fibers and the like.

The separation membrane 130 may also include a ceramic material. For example, inorganic particles may be coated on the polymer film or dispersed in the polymer film to improve heat resistance.

The separation membrane 130 may have a single-layer or multi-layer structure including the above-described polymer film and/or non-woven fabric.

According to exemplary embodiments, the cathode 115, the anode 125, and the separation membrane 130 may be repeatedly disposed to form an electrode assembly. In some embodiments, the electrode assembly may have a jelly roll shape formed by winding or z-folding the separation membrane.

In one embodiment, the electrode assembly may have a jelly roll shape formed by winding the cathode 115, the anode 125, and the separation membrane 130 together. In one embodiment, the electrode assembly may have a jelly roll shape in which the notched cathodes and anodes are arranged in spaces formed by repeatedly z-folding the separation membrane.

In one embodiment, the electrode assembly may be formed by repeatedly stacking the cathode 115, the anode 125, and the separation membrane 130, each being cut or separated into layers.

For example, electrode tabs (cathode tabs and anode tabs) may protrude from the cathode current collector and the anode current collector, respectively, and may extend to one side of a case. The electrode tabs may be fused together with the one side of the case and connected to electrode leads (a cathode lead and an anode lead) that extend or are exposed to the outside of the case.

For example, a pouch-type case, a prismatic case, a cylindrical case, or a coin-type case, etc. may be used as the case.

The electrode assembly may be accommodated in a case together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

The organic solvent may include an organic compound which has sufficient solubility in the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent. As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like.

The cyclic carbonate compounds may include vinylene carbonate (VC), vinyl ethylene carbonate (VEC), and the like.

The fluorine-substituted carbonate compound may include fluoroethylene carbonate (FEC), etc.

The sultone compounds may include 1,3-propane sultone, 1,3-propene sultone, 1,4-butane sultone, etc.

The cyclic sulfate compounds may include 1,2-ethylene sulfate, 1,2-propylene sulfate, etc.

The cyclic sulfite compounds may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

The invention relates also to the following numbered aspects:

Aspect 1.A method for manufacturing an electrode for a lithium secondary battery, comprising:

preparing an electrode mixture by mixing an electrode active material and a prepolymer binder comprising a polyvinylidene fluoride (PVDF)-based polymer;
dry-coating the electrode mixture onto an electrode current collector to form a preliminary electrode active material layer;
roll-pressing the preliminary electrode active material layer; and
applying an electric field to the preliminary electrode active material layer to form an electrode active material layer.

Aspect 2.The method for manufacturing an electrode for a lithium secondary battery according to aspect 1, wherein the step of roll-pressing comprises a first binder deformation that increases Young's modulus of the prepolymer binder or induces a phase transition of the prepolymer binder.

Aspect 3.The method for manufacturing an electrode for a lithium secondary battery according to aspect 2, wherein the prepolymer binder comprises a PVDF-based polymer having Young's modulus of less than 200 GPa, preferably the prepolymer binder comprises alpha-phase PVDF (a-PVDF).

Aspect 4. The method for manufacturing an electrode for a lithium secondary battery according to aspect 2 or 3, wherein the step of applying an electric field to the preliminary electrode active material layer comprises a second binder transformation that increases Young's modulus of at least a portion of the prepolymer binder that has not undergone a first phase transition through the first binder transformation or induces a phase transition.

Aspect 5.The method for manufacturing an electrode for a lithium secondary battery according to aspect 4, wherein the electrode active material layer comprises a polymer binder in which the prepolymer binder has undergone a phase transition through the first binder transformation and the second binder transformation, and
the polymer binder has Young's modulus of 200 GPa to 300 GPa.

Aspect 6.The method for manufacturing an electrode for a lithium secondary battery according to aspect 5, wherein the polymer binder comprises beta-phase PVDF ($\beta$-PVDF).

Aspect 7.The method for manufacturing an electrode for a lithium secondary battery according to any one of aspects 1 to 6, wherein the electric field has a magnitude of 0.5 kV/m to 50 kV/m.

Aspect 8.The method for manufacturing an electrode for a lithium secondary battery according to any one of aspects 1 to 7, wherein the electrode mixture is prepared in a non-solvent type.

Aspect 9.The method for manufacturing an electrode for a lithium secondary battery according to any one of aspects 1 to 8, wherein the steps of dry coating and roll-pressing are performed at a temperature of 100 °C or lower.

Aspect 10. The method for manufacturing an electrode for a lithium secondary battery according to any one of aspects 1 to 9, wherein the step of applying an electric field is performed after the step of roll-pressing.

Aspect 11. The method for manufacturing an electrode for a lithium secondary battery according to any one of aspects 1 to 10, wherein the step of applying an electric field is performed simultaneously with the step of roll-pressing.

Aspect 12. An electrode for a lithium secondary battery comprising:

an electrode current collector; and
an electrode active material layer formed on the electrode current collector and comprising an electrode active material and a polyvinylidene fluoride (PVDF)-based polymer binder having Young's modulus of 200 GPa to 300 GPa.

Aspect 13. The electrode for a lithium secondary battery according to aspect 12, wherein the PVDF-based polymer binder comprises beta-phase ($\beta$) PVDF ($\beta$-PVDF), and further comprises alpha-phase ($\alpha$) PVDF (a-PVDF) or gamma-phase ($\gamma$) PVDF ($\gamma$-PVDF).

Aspect 14. The electrode for a lithium secondary battery according to aspect 12 or 13, wherein the molar fraction of $\beta$-PVDF in the PVDF-based polymer binder is 50 mol% to 90 mol%.

Aspect 15. A lithium secondary battery comprising:

a cathode; and
an anode disposed opposite to the cathode,
wherein at least one of the cathode and the anode comprises the electrode for a lithium secondary battery according to any one of aspects 12 to 14.

## Example 1. Fabrication of electrode for secondary battery by dry coating and application of electric field

### (1) Fabrication of cathode

Li[Ni$_{0.88}$Co$_{0.1}$Mn$_{0.02}$]O$_2$ as a cathode active material, MWCNT as a conductive material, and polyvinylidene fluoride (PVDF) as a binder were mixed in a weight ratio of 92:5:3. The mixture was uniformly applied to an aluminum foil having a thickness of 12 $\mu$m using a spray method to form a preliminary electrode active material layer.

The preliminary electrode active material layer was then roll-pressed at 50 °C. An electric field ranging from 0.5 kV/m to 50 kV/m was applied using a high-voltage piezoelectric amplifier (Keithley Mod. 247, Keithley Mod. 610C). The preliminary electrode active material layer was rotated in a constant direction by a roller, while the electric field was applied to the preliminary electrode active material layer at 30 °C, and the layer was then dried and roll-pressed to fabricate a cathode.

### (2) Preparation of anode

92 wt% of artificial graphite (D50: 10 $\mu$m) as a graphite-based active material, 3 wt% of CMC/SBR (weight ratio of 2:1) as a binder, and 5 wt% of single-walled carbon nanotubes (SWCNTs) as a conductive material were mixed to prepare an anode active material composition in the form of a slurry. Thereafter, the slurry was sequentially coated onto one surface of a copper foil current collector having a thickness of 8 $\mu$m, and then dried and roll-pressed to form an anode active material layer on the current collector.

### (3) Manufacture of secondary battery

The cathode and anode were notched to a predetermined size and stacked, with a separator (polyethylene, thickness: 13 $\mu$m) interposed between the cathode and anode to form an electrode cell, and then the tab portions of the cathode and anode were welded, respectively. The assembly of the welded cathode/separator/anode was placed into a pouch, and three sides of the pouch were sealed, leaving one side open for electrolyte injection. At this time, a portion having the electrode tab was included in the sealed part. After injecting the electrolyte through the electrolyte injection side, the remaining electrolyte injection side was also sealed, followed by allowing it to be impregnated for 12 hours or more.

A solution, prepared by dissolving 1.1 M LiPF$_6$ in a mixed solvent of EC/EMC (volume ratio of 25:75), and then adding 8 wt% of fluoroethylene carbonate (FEC), 0.5 wt% of 1,3-propene sultone (PRS), and 1.0 wt% of 1,3-propane sultone (PS), was used as the electrolyte.

## Example 2. Fabrication of electrode for secondary battery

A cathode was fabricated in the same manner as in Example 1, except that an electric field of 0.1 kV/m was applied using a high-voltage piezoelectric amplifier. A secondary battery was then manufactured using the cathode.

### Example 3. Fabrication of electrode for secondary battery

A cathode was fabricated in the same manner as in Example 1, except that an electric field of 80 kV/m was applied using a high-voltage piezoelectric amplifier. A secondary battery was then manufactured using the cathode.

### Example 4. Fabrication of electrode for secondary battery

A cathode was fabricated in the same manner as in Example 1, except that the roll-pressing of the preliminary electrode active material layer was performed at a temperature of 120 °C. A secondary battery was then manufactured using the cathode.

### Example 5. Fabrication of electrode for secondary battery

A cathode was fabricated in the same manner as in Example 1, except that the application of the electric field to the preliminary electrode active material layer was performed at a temperature of 120 °C. A secondary battery was then manufactured using the cathode.

### Comparative Example 1. Fabrication of electrode for secondary battery

The same cathode active material, conductive material, and binder as in Example 1 were added and mixed in N-methyl-2-pyrrolidone (NMP) to prepare a slurry. The slurry was applied to an aluminum foil to form a preliminary electrode active material layer, and the layer was then dried and roll-pressed to fabricate a cathode. A secondary battery was then manufactured using the cathode.

### Comparative Example 2. Fabrication of electrode for secondary battery by wet coating

The same cathode active material, conductive material, and binder as in Example 1 were added and mixed in N-methyl-2-pyrrolidone (NMP) to prepare a slurry. The slurry was applied to an aluminum foil to form a preliminary electrode active material layer, and the layer was then dried and roll-pressed to fabricate a cathode. After drying and rolling, an electric field was applied under the same conditions as in Example 1 to fabricate the cathode. A secondary battery was then manufactured using the cathode.

### Experimental Example 1. Evaluation of elastic modulus

The elastic restoring force of the polyvinylidene fluoride was evaluated.
Specifically, an electric field ranging from 0.5 kV/m to 50 kV/m was applied to the polyvinylidene fluoride using the high-voltage piezoelectric amplifier. The elastic restoring force and the elastic modulus before and after the application of the electric field were measured. The elastic modulus was calculated using a computer program based on density functional theory (DFT).
The measurement results showed that the elastic modulus of the polyvinylidene fluoride prior to the application of the electric field was about 150 GPa. After the application of the electric field, the elastic modulus of the polyvinylidene fluoride was measured to be about 250 GPa.

### Experimental Example 2. Evaluation of swelling characteristics

The secondary batteries manufactured according to the examples and comparative examples were subjected to heat-press pre-charging for 60 minutes at an average current of 0.5C. After stabilization for 12 hours or more, degassing was performed and aging was conducted for 24 hours or more, followed by formation charge and discharge (charging conditions: CC-CV 0.25C 4.2 V 0.05C cut-off, discharging conditions: CC 0.25C 2.5 V cut-off). Thereafter, standard charge and discharge was performed (charging conditions: CC-CV 0.33C 4.2 V 0.05C cut-off, discharging conditions: CC 0.33C 2.5 V cut-off).
Thereafter, 1,000 charge-discharge cycles were performed at room temperature, and the thickness expansion ratio was measured. The measurement results are shown in Table 1 below.

[TABLE 1]

| Classification | Thickness expansion ratio (%) |
|---|---|
| Example 1 | 107% |

(continued)

| Classification | Thickness expansion ratio (%) |
|---|---|
| Example 2 | 110% |
| Example 3 | 109% |
| Example 4 | 110% |
| Example 5 | 110% |
| Comparative Example 1 | 113% |
| Comparative Example 2 | 112% |

In the secondary batteries manufactured according to the examples, the binder was hardly affected by the volume change of the active material occurring during the charge/discharge processes, resulting in a reduced thickness expansion ratio.

In the secondary batteries manufactured according to Comparative Examples 1 and 2, the binder exhibited permanent deformation due to the volume expansion of the active material during the charge/discharge processes, resulting in an increased thickness expansion ratio.

[Description of Reference Numerals]

100: Electrode
105: Electrode active material
110: Electrode active material layer
120: Electrode current collector
130: Separation membrane
170: Preliminary electrode active material layer
210: Electrode mixture mixing unit
220: Rolling unit
230: Electric field application unit
240: Electric field supply unit

**Claims**

1.　A method for manufacturing an electrode for a lithium secondary battery, comprising:

　preparing an electrode mixture by mixing an electrode active material and a prepolymer binder comprising a polyvinylidene fluoride (PVDF)-based polymer;
　dry-coating the electrode mixture onto an electrode current collector to form a preliminary electrode active material layer;
　roll-pressing the preliminary electrode active material layer; and
　applying an electric field to the preliminary electrode active material layer to form an electrode active material layer.

2.　The method for manufacturing an electrode for a lithium secondary battery according to claim 1, wherein the step of roll-pressing comprises a first binder deformation that increases Young's modulus of the prepolymer binder or induces a phase transition of the prepolymer binder.

3.　The method for manufacturing an electrode for a lithium secondary battery according to claim 2, wherein the prepolymer binder comprises a PVDF-based polymer having Young's modulus of less than 200 GPa, preferably the prepolymer binder comprises alpha-phase PVDF (a-PVDF).

4.　The method for manufacturing an electrode for a lithium secondary battery according to claim 2 or 3, wherein the step of applying an electric field to the preliminary electrode active material layer comprises a second binder transformation that increases Young's modulus of at least a portion of the prepolymer binder that has not undergone a first phase transition through the first binder transformation or induces a phase transition.

5. The method for manufacturing an electrode for a lithium secondary battery according to claim 4, wherein the electrode active material layer comprises a polymer binder in which the prepolymer binder has undergone a phase transition through the first binder transformation and the second binder transformation, and
the polymer binder has Young's modulus of 200 GPa to 300 GPa.

6. The method for manufacturing an electrode for a lithium secondary battery according to claim 5, wherein the polymer binder comprises beta-phase PVDF ($\beta$-PVDF).

7. The method for manufacturing an electrode for a lithium secondary battery according to any one of claims 1 to 6, wherein the electric field has a magnitude of 0.5 kV/m to 50 kV/m.

8. The method for manufacturing an electrode for a lithium secondary battery according to any one of claims 1 to 7, wherein the electrode mixture is prepared in a non-solvent type.

9. The method for manufacturing an electrode for a lithium secondary battery according to any one of claims 1 to 8, wherein the steps of dry coating and roll-pressing are performed at a temperature of 100 °C or lower.

10. The method for manufacturing an electrode for a lithium secondary battery according to any one of claims 1 to 9, wherein the step of applying an electric field is performed after the step of roll-pressing.

11. The method for manufacturing an electrode for a lithium secondary battery according to any one of claims 1 to 10, wherein the step of applying an electric field is performed simultaneously with the step of roll-pressing.

12. An electrode for a lithium secondary battery comprising:

an electrode current collector; and
an electrode active material layer formed on the electrode current collector and comprising an electrode active material and a polyvinylidene fluoride (PVDF)-based polymer binder having Young's modulus of 200 GPa to 300 GPa.

13. The electrode for a lithium secondary battery according to claim 12, wherein the PVDF-based polymer binder comprises beta-phase ($\beta$) PVDF ($\beta$-PVDF), and further comprises alpha-phase ($\alpha$) PVDF (a-PVDF) or gamma-phase ($\gamma$) PVDF ($\gamma$-PVDF).

14. The electrode for a lithium secondary battery according to claim 12 or 13, wherein the molar fraction of $\beta$-PVDF in the PVDF-based polymer binder is 50 mol% to 90 mol%.

15. A lithium secondary battery comprising:

a cathode; and
an anode disposed opposite to the cathode,
wherein at least one of the cathode and the anode comprises the electrode for a lithium secondary battery according to any one of claims 12 to 14.

[FIG. 1]

[FIG. 2]

[FIG. 3A]

[FIG. 3B]

[FIG. 3C]

[FIG. 4A]

105
150a
150b

[FIG. 4B]

105
150a
150b

[FIG. 4C]

105
150a
150b

[FIG. 5A]

105
150a
150b

[FIG. 5B]

105
150a
150b

[FIG. 5C]

105
150a
150b

[FIG. 6]

**EUROPEAN SEARCH REPORT**

Application Number

EP 25 20 8412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 982 171 A (VITZROBATTERY CO LTD; MARKSON INC) 31 October 2023 (2023-10-31)<br>* claim 1 *<br>* claim 10 *<br>* claim 11 *<br>* paragraphs [0090], [0112], [0113], [0158], [0159]; claim 13 *<br>* paragraph [0164] *<br>----- | 1-15 | INV.<br>H01M4/04<br>H01M4/139<br>H01M4/62 |
| X | US 2024/145723 A1 (PARK SIMON [CA] ET AL) 2 May 2024 (2024-05-02)<br>* claim 1 *<br>* claim 10 *<br>* claim 11 *<br>* paragraph [0085]; figures 2, 3 *<br>* paragraph [0159] *<br>----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 24 February 2026 | Koessler, Jean-Luc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 20 8412

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2026

| Patent document cited in search report | | Publication date | Patent family member(s) | | Publication date |
|---|---|---|---|---|---|
| CN 116982171 | A | 31-10-2023 | CN | 116982171 A | 31-10-2023 |
| | | | CN | 116982173 A | 31-10-2023 |
| | | | CN | 117083730 A | 17-11-2023 |
| | | | KR | 102447011 B1 | 23-09-2022 |
| | | | KR | 20220128932 A | 22-09-2022 |
| | | | KR | 20220128947 A | 22-09-2022 |
| US 2024145723 | A1 | 02-05-2024 | CA | 3210793 A1 | 22-09-2022 |
| | | | EP | 4309223 A1 | 24-01-2024 |
| | | | JP | 7754940 B2 | 15-10-2025 |
| | | | JP | 2024510331 A | 06-03-2024 |
| | | | US | 2024145723 A1 | 02-05-2024 |
| | | | WO | 2022196977 A1 | 22-09-2022 |

EPO FORM P0459

For more details about this annex : see Official Journal of the European Patent Office, No. 12/82